# FASCICULE DE BREVET EUROPEEN

(11) **EP 3 350 019 B1**
(45) Date de publication et mention de la délivrance du brevet: **22.01.2025**
(21) Numéro de dépôt: 16770717.3
(22) Date de dépôt: 14.09.2016
(51) Int. Cl.: B60Q 1/08, F21S 41/141, F21S 41/32, F21S 41/365, F21S 41/663, F21S 41/675, F21W 102/19

(54) **SYSTÈME D'ÉCLAIRAGE POUR VÉHICULES AUTOMOBILES**
BELEUCHTUNGSSYSTEM FÜR KRAFTFAHRZEUGE
LIGHTING SYSTEM FOR MOTOR VEHICLES

(30) Priorité: 14.09.2015 FR 1558584
(43) Date de publication de la demande: 25.07.2018
(73) Titulaire: Valeo Vision, 93012 Bobigny Cedex (FR)
(72) Inventeur: COURCIER, Marine, 93012 Bobigny (FR); SANCHEZ, Vanesa, 93012 Bobigny (FR); MOREL, Xavier, 93012 Bobigny (FR); MEYRENAUD, Jean-Luc, 93012 Bobigny (FR); SOMMERSCHUH, Stephan, 75013 Paris (FR); LUO, Weicheng, 75013 Paris (FR); EL IDRISSI, Hafid, 93500 Pantin (FR)
(74) Mandataire: Valeo Visibility
(86) Numéro de dépôt international: PCT/EP2016/071702
(87) Numéro de publication internationale: WO 2017/046168

(56) Documents cités:
- EP-A2- 0 976 973
- EP-A2- 2 772 682
- FR-A1- 2 754 500
- FR-A1- 2 854 226
- FR-A1- 3 008 477
- FR-A1- 3 009 366
- JP-A- 2011 233 305
- JP-A- 2014 189 198
- US-A1- 2007 091 629
- US-A1- 2007 103 923

## Description

La présente invention est relative notamment à un système d'éclairage.

Une application préférée concerne l'industrie automobile, pour l'équipement de véhicules, en particulier pour la réalisation de dispositifs susceptibles de pouvoir émettre des faisceaux lumineux, encore appelés fonctions d'éclairage, répondant en général à des réglementations.

Notamment l'invention peut permettre la production d'un faisceau du type croisement seul ou en combinaison avec une fonction de signalisation et/ou d'éclairage, d'intensité bien plus faible.

Les dispositifs d'éclairage et de signalisation connus sont jusqu'à présent prévus pour émettre par exemple :
- un faisceau de croisement, dirigé vers le bas, encore parfois appelé faisceau de code et utilisé en cas de présence d'autres véhicules sur la chaussée;
- un faisceau de route dépourvu de coupure, et caractérisé par un éclairement maximal dans l'axe du véhicule ;
- un faisceau d'éclairage pour temps de brouillard, caractérisé par une coupure plate et une grande largeur d'éclairement ;
- un faisceau de signalisation pour la circulation en ville, encore appelé lampe de ville.

Le document US 2007/103923 A1 décrit un dispositif d'éclairage pouvant générer un faisceau de croisement et comprenant une pluralité de modules générant des sous-faisceaux afin d'adapter l'éclairage aux conditions dans lesquelles se trouve le véhicule.

Le faisceau de croisement est fondamental dans la mesure où sa bonne définition conditionne à la fois la qualité de l'éclairage et l'absence, ou la réduction, de la gêne occasionnée par le flux lumineux produit pour les véhicules alentours. Actuellement, les feux de croisement sont essentiellement définis dans cette optique, avec, en particulier, le recours à des coupures parfois complexes en haut de faisceau, de sorte à limiter précisément ou éviter l'éclairement au-dessus de la ligne d'horizon, et à concevoir au mieux une zone de projection de lumière à proscrire car susceptible de gêner le conducteur d'un véhicule croisé.

Le document JP 2014 189198 A décrit un système d'éclairage pour véhicule automobile comportant un dispositif de projection d'un faisceau de croisement. Ce dispositif de projection du faisceau de croisement est conçu de sorte que le faisceau de croisement comprend une zone sombre. Le système d'éclairage divulgué comprend en outre un dispositif de projection additionnel configuré pour projeter un faisceau pixélisé dans ladite zone sombre.

Il existe cependant un besoin pour améliorer la définition des faisceaux de croisement.

L'invention s'inscrit dans ce cadre.

Elle concerne en particulier un système d'éclairage pour véhicule automobile selon la revendication 1, ledit système comportant un dispositif de projection d'un faisceau de croisement dans une zone de projection.

Selon l'invention, ce système est tel que le dispositif de projection est configuré pour que le faisceau de croisement comprenne une zone de moindre illumination située à l'intérieur de la zone de projection. Ainsi, le feu de croisement présente une intensité lumineuse modulée selon le lieu de projection dans la zone globale de projection. Cela est avantageux dans certaines circonstances. L'une d'entre-elles concerne les cas de fortes précipitations, la zone de moindre illumination ayant un effet moins réfléchissant pour le conducteur. Une autre situation est relative à la projection concomitante d'un faisceau additionnel. En effet, la zone de moindre illumination peut ménager un espace propice à la projection d'un autre faisceau. Ce faisceau peut notamment permettre une signalisation, étant par exemple doté d'un motif du type pictogramme. Alors que l'on aurait communément pensé à superposer, au-dessus du faisceau de croisement, un faisceau de plus forte intensité visant une signalisation, l'invention offre une solution moins consommatrice d'énergie et plus flexible. En effet, la zone de moindre illumination du faisceau de croisement peut être le lieu d'une projection additionnel de faible intensité, en particulier moindre que celle du feu de croisement. Cette caractéristique offre en outre un éventail de technologies utilisables pour la projection du faisceau additionnel. Il peut s'agir de techniques de projection de faisceaux sous forme de rayons pixélisés. Ces techniques, qui ne sont pas toujours puissantes en termes de flux lumineux, offrent une grande souplesse de choix de formes de faisceaux. Elles sont ici utilisables, grâce à la zone de moindre illumination de l'invention.

Selon une caractéristique optionnelle de l'invention, on peut prévoir que la zone de moindre illumination comprend une limite supérieure décalée angulairement par rapport à une limite supérieure du faisceau de croisement d'une valeur d'angle d'au moins 5°, préférentiellement d'au moins 6°, par rapport au point d'émission du faisceau de croisement, dans un plan vertical et longitudinal.

Selon l'invention, le système comprend un dispositif de projection d'un faisceau additionnel formé de rayons pixélisés et configuré pour illuminer une zone couvrant au moins en partie la zone de moindre illumination. Cette technologie offre une grande résolution et permet de produire différentes formes de faisceau additionnel. La zone de moindre illumination comprend de préférence mais non limitativement une bordure supérieure inclinée d'au moins 5°, préférentiellement 6°, relativement à un plan horizontal.

Ainsi, l'invention permet une projection additionnelle, à l'intérieur de l'espace occupé par le faisceau de croisement. Comme une zone de moindre intensité est présente, ce faisceau additionnel peut être moins éclairant que le faisceau code tel que projeté en dehors de la zone de moindre illumination.

Selon l'invention, le dispositif de projection du faisceau de croisement comporte au moins une pluralité de modules aptes chacun à produire un sous-faisceau participant au faisceau de croisement, le dispositif de projection du faisceau de croisement étant configuré de sorte que la position relative d'au moins deux sous-faisceaux soit modifiable entre au moins une position dans laquelle la zone de moindre illumination est présente et au moins une autre position dans laquelle la zone de moindre illumination est absente.

Cette possibilité permet de placer le système de l'invention dans au moins deux configurations différentes de fonctionnement. La première peut représenter la position de feu de croisement traditionnel, sans zone de moindre illumination. La deuxième correspond à la présence de zone de moindre illumination. Ainsi, le système peut évoluer entre deux modes de fonctionnement.

D'autres caractéristiques optionnelles du système d'éclairage et/ou de signalisation selon l'invention, qui peuvent être mises en œuvre de façon combinée selon toutes associations entre-elles ou de manière alternative, sont indiquées ci-après :
- le faisceau additionnel est configuré pour produire le contour d'au moins un pictogramme ;
- la zone de moindre illumination est entièrement couverte par le faisceau additionnel ;
- le dispositif de projection d'un faisceau additionnel comprend un système à matrice de micro miroirs ;
- la zone de moindre illumination est symétrique autour d'un plan vertical passant par l'axe optique du dispositif de projection du faisceau de croisement ;
- la zone de moindre illumination couvre un secteur angulaire de moins de 10° en section horizontale ;
- la pluralité de modules comprend au moins un module configuré pour produire un sous-faisceau mobile en rotation ;
- la pluralité de modules comprend au moins un premier groupe d'au moins un module situé d'un premier côté de l'axe optique du dispositif de projection de faisceau de croisement, et un deuxième groupe d'au moins un module situé d'un autre côté dudit l'axe optique ;
- le premier groupe est éventuellement configuré pour éclairer uniquement du premier côté de l'axe optique et le deuxième groupe est configuré pour éclairer uniquement du deuxième côté de l'axe optique
- chacun parmi le premier groupe et le deuxième groupe peut être configuré pour produire un faisceau présentant une portion de moindre illumination sur un bord latéral de faisceau situé du côté de l'axe optique, les portions de moindre illumination participant à former la zone de moindre illumination.
- chacun parmi le premier groupe et le deuxième groupe peut être configuré pour produire un faisceau présentant un profil, suivant un plan vertical perpendiculaire à l'axe optique, avec un rétrécissement en hauteur en direction de l'axe optique ;
- le premier groupe et le deuxième groupe sont éventuellement configurés pour produire des faisceaux symétriques l'un de l'autre relativement à un plan vertical passant par l'axe optique.
- la position relative des sous-faisceaux produits respectivement par les modules du premier groupe et par ceux du deuxième groupe peut être modifiable ;
- le système comprend un troisième groupe d'au moins un module situé suivant l'axe optique.

L'invention est aussi relative à un véhicule équipé d'au moins un système tel qu'introduit ci-dessus. Le véhicule peut comprendre deux systèmes, chacun au niveau d'un côté différent de la partie frontale du véhicule.

Le système peut être intégré dans un bloc de projecteur de phare.

D'autres caractéristiques, buts et avantages de la présente invention apparaîtront à la lecture de la description détaillée qui suit, et en regard des dessins annexés donnés à titre d'exemples non limitatifs et sur lesquels :
- la figure 1 montre schématiquement le lieu d'une projection d'un faisceau de croisement et la présence d'une zone de moindre illumination, en vue de profil.
- la figure 2 montre cette projection en vue de dessus ;
- la figure 3 illustre dans un plan vertical le faisceau de croisement, ici pour l'exemple à coupure ;
- la figure 4 montre un premier mode de réalisation d'un dispositif de projection du faisceau de croisement ;
- la figure 5 est une courbe isolux du résultat de la projection du faisceau de croisement ;
- la figure 6 présente un exemple de module optique à matrice de micro-miroirs ;
- la figure 7 montre une forme possible du faisceau additionnel ;
- la figure 8 représente l'association du faisceau de croisement et du faisceau additionnel ;
- la figure 9 est une vue de la projection d'un pictogramme dans le faisceau additionnel durant la projection du faisceau de croisement ;
- la figure 10a montre un deuxième mode de réalisation d'un dispositif de projection du faisceau de croisement, ce dispositif étant dans une première position ;
- la figure 10b est une courbe isolux de deux sous-faisceaux du faisceau projeté dans cette première position ;
- la figure 11a montre une deuxième position du dispositif de projection dans le deuxième mode de réalisation ;
- la figure 11b est une courbe isolux de deux sous-faisceaux du faisceau projeté dans cette deuxième position ;
- la figure 12 illustre une vue en coupe verticale d'un exemple de projection produit par un système selon un autre mode de réalisation de l'invention ;
- la figure 13 s'inscrit dans le mode de réalisation de la figure 12 et montre le résultat d'une projection, vu de dessus ;
- la figure 14 est un exemple de réalisation d'un groupe de modules pouvant former une partie du faisceau global souhaité, pour le mode de réalisation des figures 12 et 13 notamment.

Dans les caractéristiques exposées ci-après, les termes relatifs à la verticalité, l'horizontalité et à la transversalité, ou leurs équivalents, s'entendent par rapport à la position dans laquelle le système d'éclairage est destiné à être monté dans un véhicule. Les termes « vertical » et « horizontal » sont utilisés dans la présente description pour désigner des directions, suivant une orientation perpendiculaire au plan de l'horizon pour le terme « vertical », et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées.

Le terme « bas » ou partie basse s'entend généralement d'une partie d'un élément de l'invention située, suivant un plan vertical, en dessous de l'axe optique. Le terme « haut » ou partie haute s'entend d'une partie d'un élément de l'invention située, suivant un plan vertical, au-dessus de l'axe optique. Le terme « parallèle » ou la notion d'axes ou lignes confondus s'entend ici notamment avec les tolérances de fabrication ou de montage, des directions sensiblement parallèles ou des axes sensiblement confondus entrent dans ce cadre.

Dans le cadre de l'invention, on entend par faisceau de croisement un faisceau employé lors de la présence de véhicules croisés et/ou suivis et/ou d'autres éléments (individus, obstacles...) sur la chaussée ou à proximité. Ce faisceau présente une direction moyenne descendante. Il peut être éventuellement caractérisé par une absence de lumière au-dessus d'un plan incliné de 1% vers le bas du côté de la circulation dans l'autre sens, et d'un autre plan incliné de 15 degrés par rapport au précédent du côté de la circulation dans le même sens, ces deux plans définissant une coupure conforme à la réglementation européenne. Cette coupure supérieure descendante a pour but d'éviter d'éblouir les autres usagers présents dans la scène de route s'étendant devant le véhicule ou sur les bas-côtés de la route.

Le faisceau de croisement, autrefois issu d'un projecteur simple, a connu des évolutions, la fonction de croisement pouvant être couplée avec d'autres caractéristiques d'éclairage. On a ainsi récemment élaboré de nouvelles fonctions, désignées comme fonctions élaborées et regroupées sous le nom d'AFS (abréviation pour « Advanced Frontlighting System » en anglais), qui proposent notamment d'autres types de faisceaux. Il s'agit notamment de la fonction dite BL (Bending Light en anglais pour éclairage de virage), qui peut se décomposer en une fonction dite DBL (Dynamic Bending Light en anglais pour éclairage mobile de virage) et une fonction dite FBL (Fixed Bending Light en anglais pour éclairage fixe de virage). Ces fonctions d'éclairage de virage sont utilisées en cas de circulation en courbe, et elles sont réalisées au moyen de projecteurs qui émettent un faisceau lumineux dont l'orientation horizontale varie lorsque le véhicule se déplace sur une trajectoire incurvée, de façon à éclairer correctement les portions de route qui sont destinées à être abordées par le véhicule et qui se trouvent non pas dans l'axe du véhicule, mais dans la direction qu'il est sur le point d'emprunter, résultant de l'angle imprimé aux roues directrices du véhicule par son conducteur. Une autre fonction est dite Town Light en anglais, pour éclairage de ville. Cette fonction assure l'élargissement d'un faisceau de type feu de croisement tout en diminuant légèrement sa portée. La fonction dite Motorway Light en anglais, pour éclairage d'autoroute, réalise quant à elle la fonction autoroute. Cette fonction assure une augmentation de la portée d'un feu de croisement en concentrant le flux lumineux du feu de croisement au niveau de l'axe optique du dispositif projecteur considéré. On connait aussi la fonction dite Overhead Light en anglais, pour feu de portique. Cette fonction assure une modification d'un faisceau de feu de croisement typique de telle sorte que des portiques de signalisation situés au-dessus de la route soient éclairés de façon satisfaisante au moyen des feux de croisement. Une autre variante de feu de croisement est la fonction dite AWL (Adverse Weather Light en anglais, pour feu de mauvais temps). Cette fonction assure une modification d'un faisceau de feu de croisement de telle sorte que le conducteur d'un véhicule circulant en sens inverse ne soit pas ébloui par le reflet de la lumière des projecteurs sur la route mouillée. De plus, lorsque l'éclairage de croisement est en fonction, l'assiette du véhicule peut subir des variations plus ou moins importantes, dues par exemple à son état de charge, son accélération ou sa décélération, qui provoquent une variation de l'inclinaison de la coupure supérieure du faisceau, ayant pour résultat soit d'éblouir les autres conducteurs si la coupure se trouve relevée, soit d'éclairer insuffisamment la route si la coupure se trouve abaissée. Il est alors connu d'utiliser un correcteur de portée, à commande manuelle ou automatique, pour corriger l'orientation des projecteurs de croisement. D'une manière générale, le faisceau de croisement visé par l'invention comprend le faisceau code conforme à la réglementation et ses évolutions dont celles décrites ci-dessus. D'une façon générale, le faisceau de croisement peut s'entendre de tout faisceau descendant et/ou éclairant la chaussée sans dépasser significativement la ligne d'horizon.

Dans la description qui suit, des numéros de référence similaires seront utilisés pour décrire des concepts similaires à travers des modes de réalisation différents de l'invention. Sauf indication spécifique du contraire, des caractéristiques techniques décrites en détail pour un mode de réalisation donné peuvent être combinés à tout ou partie des caractéristiques techniques décrites dans le contexte d'autres modes de réalisation décrits à titre exemplaire et non limitatif.

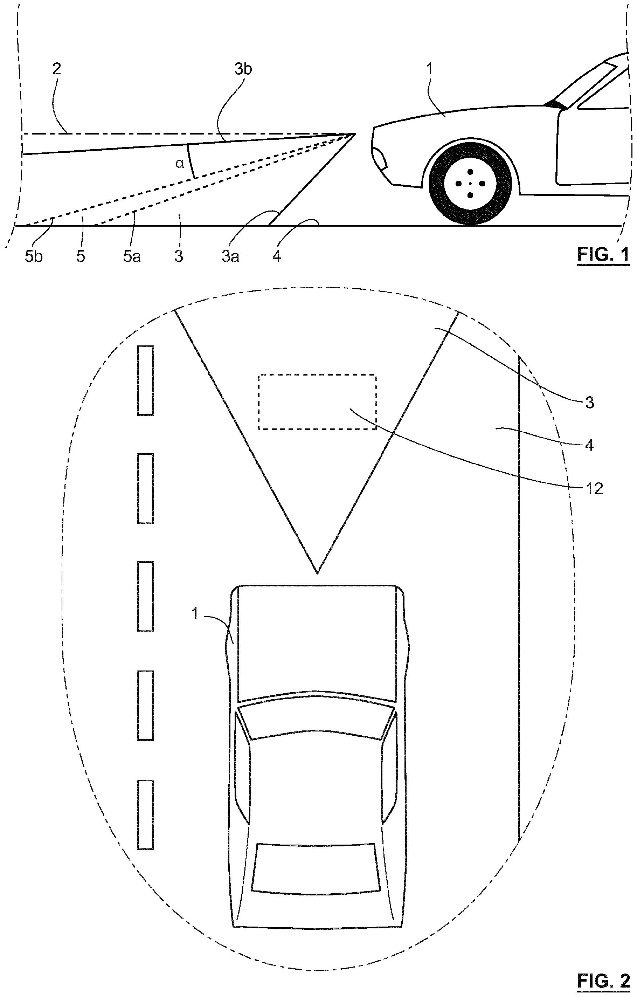

La figure 1 illustre schématiquement un exemple de projection descendante à l'avant d'un véhicule automobile 1. Dans cet exemple qui schématise la projection d'un feu de croisement 3, ce dernier est projeté en-deçà d'un plan horizontal 2 de sorte à impacter la chaussée 4 à l'avant d'un véhicule automobile 1. On peut se reporter aux indications données précédemment à propos des faisceaux de croisement en ce qui concerne les caractéristiques de projection de ce faisceau. Globalement, le faisceau de croisement 3 comporte une enveloppe extérieure avec une limite inférieure 3a définissant une limite de l'enveloppe du faisceau la plus proche du véhicule et correspondant à la plus forte inclinaison relativement au plan horizontal 2 et une limite supérieure 3b correspondant à une limite supérieure de l'enveloppe du faisceau 3, la moins inclinée relativement au plan horizontal 2.

Comme précédemment indiqué, un aspect de l'invention est de proposer une définition spécifique ou évolutive du faisceau de croisement 3. Dans ce cadre, la figure 1 schématise également la présence d'une zone 5 de moindre illumination. Telle que schématisée, la zone 5 est délimitée par une limite inférieure 5a et une limite supérieure 5b représentées en pointillés et définissant, dans un plan longitudinal et vertical perpendiculaire au plan horizontal 2, les inclinaisons respectivement maximale et minimale de l'enveloppe de la zone 5.

Par moindre illumination, on entend que l'éclairement lumineux moyen dans la zone de moindre illumination 5 est inférieur d'au moins 70%, préférentiellement au moins 80%, plus préférentiellement au moins 90%, de préférence au moins 97%, de manière tout à fait préférée d'au moins 99%, à l'éclairement lumineux moyen dans le reste de la zone de projection du faisceau de croisement 3. Autrement dit, on cherche à n'avoir quasiment pas de lumière dans cette zone de moindre illumination. On relèvera ainsi des valeurs moyennes d'intensité lumineuse inférieures à 400 candelas, de préférence inférieures à 100 candelas, avantageusement inférieures à 50 candela, plus préférentiellement inférieures à 30 candela dans cette zone de moindre illumination tandis que dans le reste du faisceau, et en particulier à proximité immédiate de cette zone, les valeurs seront supérieures à au moins 2000 voire 3000 candelas.

La position de cette zone de moindre illumination 5 peut varier à l'intérieur du faisceau de croisement 3, et à titre d'exemple qui sera repris ci-après, on pourrait avoir une limite inférieure 5a de la zone 5 confondue avec la limite inférieure 3a du faisceau de croisement 3. Il est particulièrement intéressant, notamment dans l'utilisation de cette zone de moindre illumination pour la projection d'un faisceau additionnel 12 que l'on souhaite rendre visible pour le conducteur, que la zone de moindre illumination soit disposée à l'intérieur du faisceau de croisement à distance suffisante de la limite supérieure 3b du faisceau de croisement 3 pour être bordée dans sa partie supérieure par une zone de forte illumination. Notamment, on pourra prévoir que la zone de moindre illumination 5 comprend une limite supérieure 5b décalée angulairement par rapport à la limite supérieure 3b du faisceau de croisement 3, d'un angle α (visible sur la figure 1) par rapport au point d'émission du faisceau de croisement dans le plan longitudinal et vertical illustré sur la figure 1, l'angle α ayant une valeur d'au moins 5°.

La figure 2 est une vue de dessus d'un véhicule automobile 1 et d'une zone située à l'avant de ce véhicule. Dans cet exemple, on a représenté en pointillés la projection d'un faisceau additionnel 12 à l'intérieur du faisceau de croisement 3, le faisceau additionnel 12 pouvant être configuré de sorte à recouvrir en tout ou partie la zone 5 précédemment présentée.

Un intérêt de l'invention est de faire en sorte que le faisceau additionnel 12 tire profit des caractéristiques de la zone 5 pour réaliser un éclairage ou une signalisation spécifique à l'intérieur du faisceau de croisement 3. Avantageusement, la formation de la zone 5 est réversible en ce sens que la définition du faisceau de croisement peut être modifiée pour supprimer cette zone, ou encore la réduire, la déplacer, l'agrandir ou modifier sa forme. On donne ultérieurement dans la description des exemples de réalisation de cette modification de faisceau.

La zone 5 est de moindre illumination relativement au reste du faisceau de croisement 3, c'est-à-dire qu'elle se présente sous une forme relativement ombrée à l'intérieur de la zone de projection du faisceau de croisement 3. Le faisceau additionnel 12 peut réaliser une projection au moins au niveau de cette zone 5 de sorte par exemple à produire une partie complémentaire du faisceau de croisement 3 relativement à une partie projetée par un projecteur de base du faisceau de croisement 3 ou encore pour réaliser une projection parallèle au feu de croisement par exemple pour produire une signalisation tel que cela sera décrit en détail plus loin.

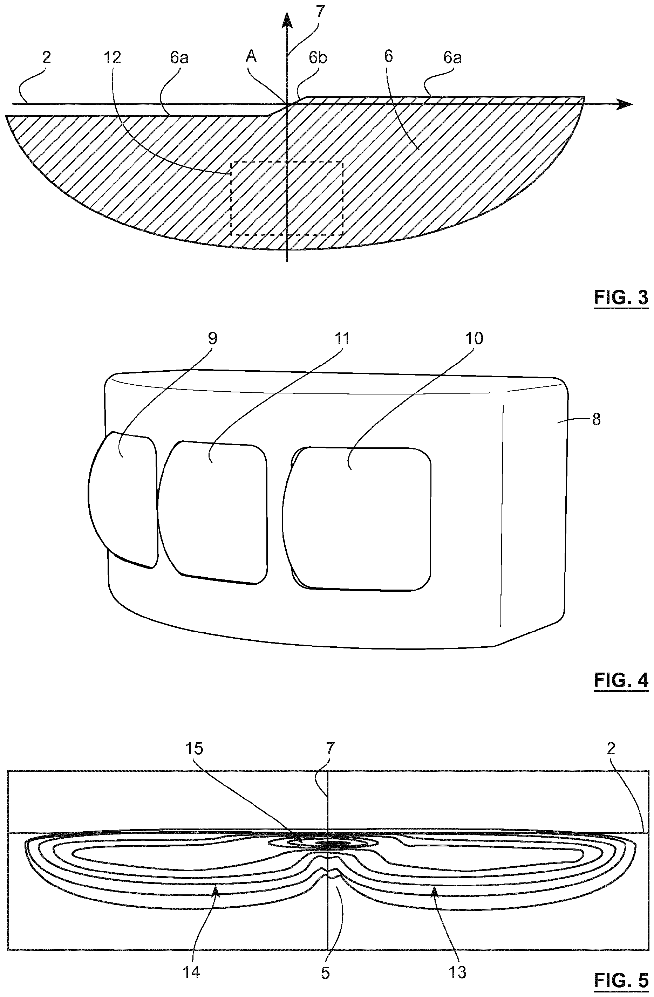

La figure 3 est une autre illustration de l'insertion, dans un faisceau de croisement qui peut être traditionnel, d'un faisceau additionnel 12. A cette figure, le plan horizontal 2 est représenté sous forme de ligne d'horizon sur un plan vertical contenant un axe vertical 7 passant par l'axe optique passant par le point A du système d'éclairage. De façon conventionnelle, la zone illuminée 6 du faisceau de croisement 3 peut typiquement présenter une bordure supérieure sensiblement au niveau du plan horizontal 2 de la ligne d'horizon et dotée d'une première portion correspondant à une coupure haute 6a légèrement au-dessus de l'horizon, une deuxième portion dénommée coupure basse 6c légèrement en deçà de la ligne d'horizon, ces deux portions étant jointes par une portion intermédiaire correspondant à un virage 6b, ici sous la forme d'une portion coudée, notamment linéaire, rejoignant les portions 6a et 6c. Dans l'exemple représenté mais de manière non limitative, le virage 6b passe par l'axe optique illustré par le point A. Dans sa partie basse, la zone illuminée 6 du faisceau de croisement 3 peut globalement disposer d'une enveloppe sensiblement en portion curviligne convexe, par exemple en arc de cercle ou en portion en portion pseudo-elliptique. On comprend que cette configuration permet globalement d'éclairer une zone à l'avant du véhicule automobile 1 qui est située relativement proche du véhicule et qui évite une projection ascendante susceptible d'éblouir des véhicules croisés ou suivis par le véhicule équipé du système de l'invention.

Dans le même temps, la présente invention peut permettre une fonctionnalité supplémentaire comme la définition d'une zone spécifique à l'intérieur de la zone illuminée 6 précédemment décrite, par exemple pour la projection d'un faisceau additionnel 12 schématisé par les pointillés en forme de cadre en figure 3 uniquement par souci d'explication. La forme de l'enveloppe du faisceau additionnel 12 n'est en effet pas limitée.

En vue de réaliser la projection du faisceau de croisement 3 définissant la zone illuminée 6, une possibilité est l'utilisation d'un dispositif de projection 8 qui peut être monobloc ou non et qui comporte un ou plusieurs modules optiques 9, 10, 11 ici représentés dans un même ensemble en disposant néanmoins chacun d'un élément optique de sortie individuel.

D'une manière générale, la présente invention peut utiliser, pour tout ou partie du dispositif de projection du faisceau de croisement, en particulier au niveau des modules 9, 10, 11, une source lumineuse par exemple du type diode électroluminescente encore communément appelée LED. Notamment, cette LED peut être dotée d'au moins une puce apte à émettre une lumière d'intensité avantageusement ajustable selon la fonction d'éclairage et/ou de signalisation à réaliser. Par ailleurs, le terme source lumineuse s'entend ici d'un ensemble d'au moins une source élémentaire telle une LED apte à produire un flux conduisant à générer en sortie du dispositif de l'invention au moins un flux de sortie remplissant au moins une fonction souhaitée. La source est associée généralement à un support, des moyens de connectique ainsi qu'à des moyens de dissipation de chaleur. Préférentiellement, la source est configurée pour émettre suivant une direction moyenne d'émission qui est perpendiculaire au plan de la puce de la LED si cette technique de source est employée. Les modules peuvent comprendre un dioptre de sortie par lequel le faisceau est émis, par exemple sous forme d'une surface externe de lentille. D'autres types de sources sont aussi envisageables dans l'invention, telle une ou plusieurs sources laser, notamment pour les dispositifs à rayons pixélisés tels ceux à matrice micro-miroirs décrits plus loin.

Ainsi, en revenant à la définition du faisceau de croisement 3, un dispositif de projection 8 tel que représenté en figure 4 et présentant trois modules 9, 10, 11 permet par exemple la formation d'un faisceau dont une courbe isolux est représentée en figure 5. A cette figure, correspondant à une projection à une distance donnée du véhicule, on note la formation d'un premier sous-faisceau 13 situé du côté droit de la courbe isolux et par exemple sous forme de courbes fermées ovales et allongées en lignes parallèles sensiblement dans une portion de l'espace située d'un côté de l'axe vertical 7. Ce premier sous-faisceau 13 peut correspondre au résultat de la projection issue du premier module optique 9. De manière relativement similaire voire symétrique, un deuxième sous-faisceau 14 est projeté et se situe dans le cas de la figure 5 de l'autre côté de l'axe vertical 7 relativement au premier sous-faisceau 13. Ce deuxième sous-faisceau 14 peut correspondre au résultat de la projection issue du deuxième module optique 10. On comprend que la combinaison des premier et deuxième sous-faisceaux permet de construire un ensemble plus global sensiblement élargi. De sorte à obtenir une zone d'illumination plus intense, particulièrement avantageusement au niveau de l'axe optique, un troisième sous-faisceau 15 peut être projeté bien que cet exemple ne soit pas limitatif. A cet effet, le troisième sous-faisceau 15 est ici centré autour de l'axe vertical 7 de sorte à produire une zone d'intensité plus importante sensiblement vers le milieu de la largeur du faisceau de croisement 3.

Avantageusement, la projection du troisième sous-faisceau 15 est configurée pour que la zone d'intensité plus importante soit située au voisinage de la ligne d'horizon du plan horizontal 2 et légèrement en deçà de celle-ci. Par exemple, la zone correspondant au troisième sous-faisceau 15 peut correspondre à une hauteur comprise entre 20 et 50% de la hauteur du faisceau de croisement 3 globale suivant l'axe vertical 7. Le troisième sous-faisceau 15 peut être le résultat de la projection produite par le troisième module optique 11 représenté en figure 4. On notera que dans l'exemple de la figure 5, les courbes isolux sont ainsi construites qu'une inflexion est présente, dans l'exemple sensiblement autour de l'axe vertical 7 de sorte qu'une zone moins illuminée 5 voire non illuminée est présente dans le faisceau de croisement 3. Dans le cas représenté, la zone 5 couvre une partie basse centrale de l'enveloppe de la zone illuminée si bien que, contrairement à la représentation de la figure 1, la limite inférieure 3a du faisceau de croisement 3 y est confondue avec la limite inférieure 5a de la zone moins illuminée 5. Ainsi, la présente invention n'implique pas que la zone 5 soit intégralement entourée d'une zone plus illuminée. En l'espèce, dans le cas de la figure 5, la zone moins illuminée 5 correspond à une partie basse centrale de l'enveloppe du faisceau de croisement 3, la partie inférieure de la zone de moindre illumination 5 n'étant pas bordée par une partie plus illuminée du faisceau de croisement 3.

Suivant une possibilité, la zone de moindre illumination 5 peut être utilisée pour limiter l'inconfort visuel du conducteur dans certaines situations de conduite en particulier en cas de fortes précipitations. En effet, ces situations ont tendance à produire une réflexion partielle du faisceau de croisement susceptible d'éblouir le conducteur. La présence d'une zone de moindre illumination, en tant que telle, permet de limiter ce phénomène d'éblouissement.

L'invention permet d' exploiter la zone de moindre illumination 5 pour opérer la projection du faisceau additionnel 12 évoqué précédemment. A cet effet, on emploie un dispositif de projection 16 d'un faisceau additionnel 12 formé de rayons pixélisés. Ce dispositif est conçu pour former une projection du faisceau additionnel 12 au moins en partie dans la zone de moindre illumination 5. Ce faisceau additionnel 12 peut couvrir intégralement la zone 5 ou uniquement partiellement. Il est par ailleurs entendu que la présente invention peut permettre la génération d'une pluralité de zones de moindre illumination 5 et que les explications données en référence à la projection d'un faisceau additionnel 12 peuvent être reproduites pour la projection d'une pluralité de faisceaux additionnels 12 par exemple chacun dédié à une zone de moindre illumination 5.

A propos du dispositif de projection 16 d'un faisceau additionnel 12, les techniques actuelles permettent de réaliser une projection d'un faisceau, par exemple collimaté ou convergent, formé d'une pluralité de rayons pouvant être individuellement commandés de sorte à produire une définition de faisceaux particulièrement précise et modifiable. En ce sens, on pourra utiliser un système d'imagerie pixélisée et digitale.

Les termes « système d'imagerie pixélisée et digitale », « système d'imagerie à rayons pixélisés » ou leurs équivalents ont pour définition un système émetteur d'un faisceau lumineux, ledit faisceau lumineux étant formé d'une pluralité de sous faisceaux lumineux, chaque sous faisceau lumineux pouvant être piloté indépendamment des autres sous faisceau lumineux. Chaque sous faisceau pilotable indépendamment forme un rayon pixélisé. Ces systèmes peuvent être par exemple des matrices à micro-miroirs, notamment pilotables en rotation, ou encore des dispositifs à cristaux liquides. Une autre technologie de formation de rayons pixélisés est munie d'une source laser dont le rayon est renvoyé par un dispositif de balayage sur une surface disposée au foyer d'une optique de projection et composée d'une pluralité d'éléments de matériau luminophore, usuellement désignés sous le terme de phosphore. Ces éléments luminophores réémettent de la lumière blanche qui est projetée par une lentille pour former un faisceau d'éclairage sur la route en avant du véhicule. Les segments de matériau luminophore sont disposés entre la source laser et la lentille de projection, au foyer de cette lentille.

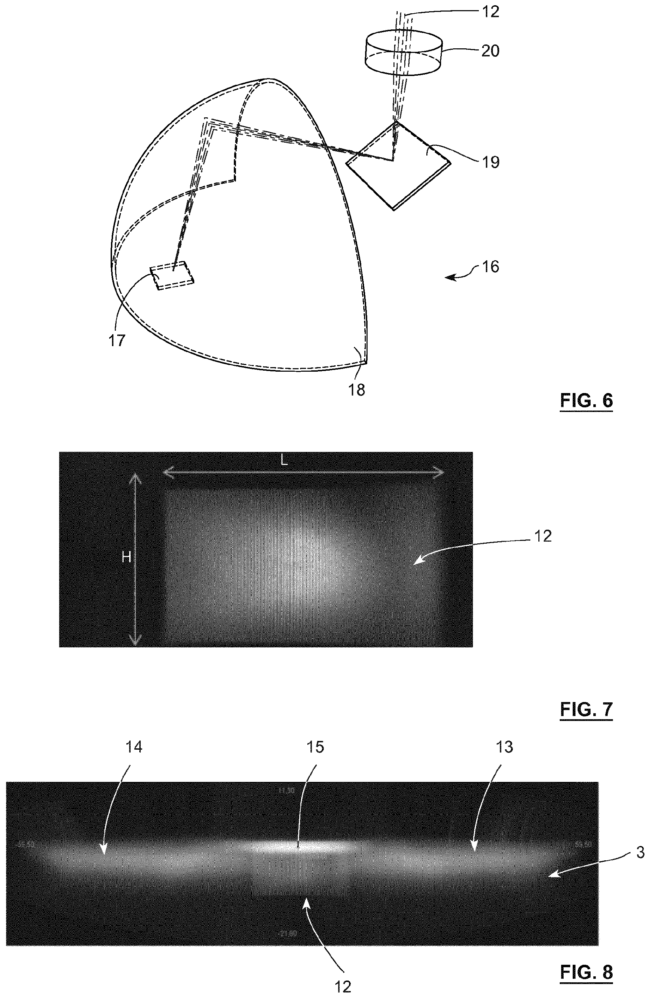

La figure 6 illustre un exemple non limitatif de système d'imagerie pixélisée et digitale 16 appelé en termes Anglo-Saxon « Digital Micromirror Device » (DMD), c'est-à-dire un dispositif à micro-miroirs, également appelé une matrice à micro-miroirs.

Ce système comprend une source lumineuse 17, pouvant être par exemple des LEDs ou bien des diodes lasers, ou toute sorte de sources lumineuses. Cette source lumineuse 17 émet un faisceau lumineux avantageusement en direction d'un réflecteur 18. Ce réflecteur 18 est de préférence configuré pour concentrer le flux de lumière incident sur une surface comportant la matrice de micro-miroirs 19.

De manière avantageuse, le réflecteur 18 est configuré pour que l'ensemble des micro-miroirs soient éclairés par le faisceau lumineux réfléchi par le réflecteur 18. Le réflecteur 18 peut avoir, suivant au moins un plan de section, un profil pseudo elliptique ou pseudo parabolique.

Une fois réfléchi par une partie au moins des micro-miroirs, le faisceau lumineux passe au travers d'un dioptre 20. De manière avantageuse, ce dioptre 20 peut être une lentille convergente par exemple.

Comme indiqué, après réflexion du faisceau lumineux sur le réflecteur 18, celui-ci vient se concentrer sur la matrice de micro-miroirs 19. De manière préférentielle, les micro-miroirs disposent chacun de deux positions de fonctionnement, une position dite active dans laquelle ils réfléchissent le faisceau lumineux incident en direction du dioptre 20, et une position dite passive dans laquelle ils réfléchissent le faisceau lumineux incident en direction d'un élément absorbeur de rayonnement lumineux non représenté dans la figure 6.

Ce type de dispositif permet de disposer en sortie du dioptre 20 d'un faisceau lumineux hautement résolu pixélisé et digitalisé : chaque pixel ou rayons pixélisé composant ce faisceau correspond à un micro-miroir, et il est alors possible d'activer ou non ces micro-pixels en simplement pilotant les micro-miroirs. Cette particularité permet alors de dessiner au besoin la forme du faisceau lumineux en sortie du dioptre 20 selon les besoins de l'invention.

Par exemple, il est possible de n'activer qu'une partie des micro-miroirs afin de former une coupure au niveau du faisceau lumineux en sortie du dioptre 20. Cette coupure permet entre autre la réalisation des fonctions présentées précédemment.

La figure 7 illustre un exemple de faisceau additionnel 12 produit par un dispositif du type représenté à la figure 6 et précédemment décrit. Le faisceau additionnel 12 est de forme rectangulaire, cette forme étant avantageusement adaptée de sorte que la superficie du faisceau additionnel 12 couvre la zone de moindre illumination 5 définie à l'intérieur du faisceau de croisement 3. Typiquement, le faisceau additionnel 12 présente une longueur « L » et une hauteur « H », la longueur « L » pouvant correspondre par exemple à un secteur angulaire de débattement du faisceau additionnel 12 dans un plan horizontal suivant une amplitude par exemple comprise entre 4 et 25° et notamment 20°. En termes de hauteur « H », cette dernière peut correspondre, dans un plan vertical, à un secteur angulaire compris entre 5 et 20° et notamment 12°. Tel que représentée, la définition du faisceau additionnel 12 est très fine grâce à l'emploi du système d'imagerie pixélisée et digitale.

La figure 8 présente le fruit de l'association d'une projection issue du dispositif de projection 8 du faisceau de croisement 3 et du faisceau additionnel 12.

A cet effet, on retrouve comme dans le cas de la figure 5 les premier et deuxième sous-faisceaux 13, 14 formant les ailes latérales du faisceau de croisement 3 ainsi qu'une zone de plus forte intensité lumineuse sensiblement au niveau de l'extrémité supérieure du faisceau global relativement centrée au niveau de l'axe optique correspondant au troisième sous-faisceau 15. Le faisceau additionnel 12 apparaît en deçà du troisième sous-faisceau 15 sous une forme de section rectangulaire permettant de superposer un signal lumineux dans le faisceau issu du dispositif de projection 8.

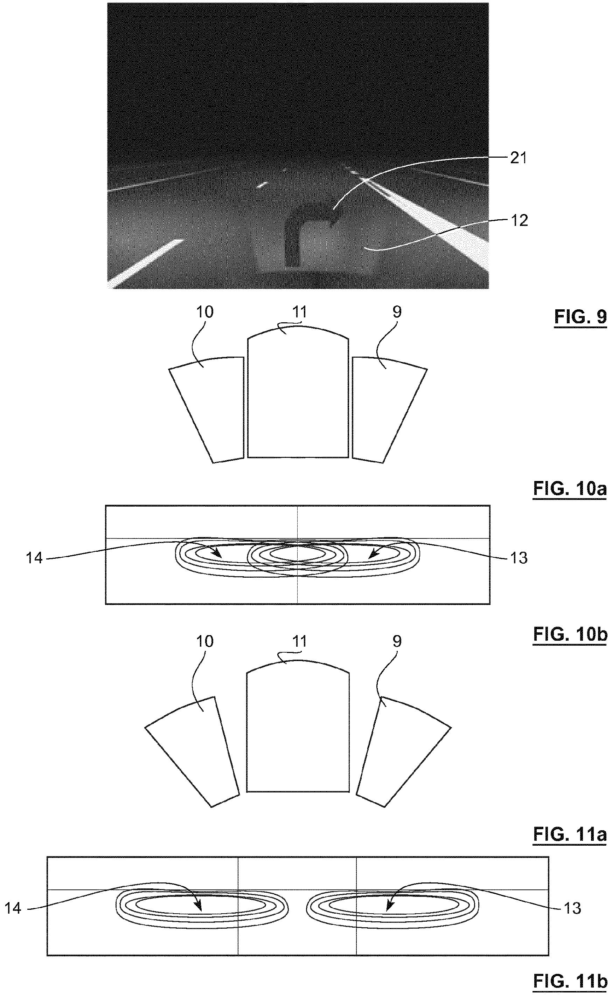

La figure 9 présente une illustration pratique du faisceau additionnel 12. Le dispositif de projection 16 du faisceau additionnel sous forme de rayons pixélisés a été commandé de sorte à générer une zone ombragée incluse dans le faisceau additionnel 12 et correspondant aux contours d'un pictogramme 21. Ainsi, il suffit dans le cadre d'un dispositif DMD, de commander certains micro-miroirs en position inactive de sorte à créer une zone ombragée à l'intérieur du faisceau additionnel 12 de sorte à générer une information graphique. Il est évidemment possible de générer plusieurs pictogrammes 21 et de modifier la commande du dispositif d'imagerie pour projeter alternativement une pluralité de pictogrammes différents selon les informations souhaitées. La projection d'un pictogramme peut être liée à une information reçue d'un système embarqué dans le véhicule, par exemple un système de navigation ou un système de commande comprenant des déclenchements d'informations de sécurité. Le pictogramme 21 peut être défini en positif ou en négatif dans le faisceau 12.

Un aspect de l'invention concerne la possibilité de passer d'une situation dans laquelle une zone de moindre illumination est présente à une situation où cette zone est absente. Suivant cet aspect, on peut par ailleurs éventuellement modifier la zone de moindre illumination 5 suivant les applications souhaitées, notamment la forme du faisceau additionnel 12 à projeter à l'intérieur de la zone de moindre illumination 5. Pour réaliser cet objet, le dispositif 8 de projection d'un faisceau de croisement est configuré de sorte à permettre la production d'un faisceau de croisement 3 évolutif au moins entre deux configurations. Ce dispositif est tel que la position relative d'au moins deux sous-faisceaux soit modifiable. Les figures 10a à 11b illustrent cette capacité. Dans le cas de la figure 10a, on a représenté un dispositif de projection 8 comportant un premier module 9 situé d'un côté de l'axe optique, un deuxième module 10 situé du côté opposé de l'axe optique et un troisième module 11, ou module central, situé entre les deux précédents.

Dans cette configuration, le résultat de la projection issue des premier et deuxième modules 9, 10 correspond aux courbes isolux schématisées en figure 10b. A cette figure, les premier et deuxième sous-faisceaux 13, 14 issus respectivement des premier et deuxième modules 9, 10 présentent un chevauchement, de préférence autour d'un plan vertical passant par l'axe optique. Dans cette configuration, le résultat global de la projection est un faisceau qui présente peu de discontinuité dans la définition de son enveloppe.

La figure 11a présente une disposition différente des modules 9, 10 du dispositif de projection 8 dans laquelle l'inclinaison des modules 9, 10 a été modifiée relativement à la position du module central 11. Le résultat de cette modification de position est révélée en figure 11b. Dans cette figure, on constate que les courbes isolux correspondant à la projection du premier sous-faisceau 13 et à la projection du deuxième sous-faisceau 14 respectivement issus des premier et deuxième modules 9, 10 sont plus éloignés suivant une direction en largeur du faisceau. Dans l'exemple représenté, cet écartement est tel que les premier et deuxième sous-faisceaux 13, 14 ne se chevauchent plus. En conséquence, une zone de moindre illumination peut être créée dans l'espace intermédiaire. Il est à noter que les courbes représentées aux figures 10b et 11b ne font pas apparaitre le troisième sous-faisceau 15 issu du troisième module 11 par souci de simplification.

Cependant, on comprend que même avec la projection du troisième sous-faisceau 15, une zone de moindre illumination 5 resterait présente entre les premier et deuxième sous-faisceaux 13, 14, dans une portion inférieure de l'enveloppe du faisceau de croisement ainsi créée.

L'invention n'est pas limitée à un mode de modification de la configuration relative des sous-faisceaux du dispositif de projection 8 du faisceau de croisement 3. Ainsi, la modification peut être produite par un mouvement d'un module ou d'une partie de celui-ci. Par exemple, la modification de position du dioptre de sortie d'un module, par exemple en rotation, peut suffire à réaliser la modification de configuration. Il peut s'agir d'une rotation appliquée à une lentille de projection ou à un réflecteur de sortie. La mobilité du module ou d'une partie de celui-ci peut notamment être un pivot suivant un ou plusieurs axes. Suivant une possibilité, la mobilité du sous-faisceau considéré est orientée suivant un axe vertical. Dans l'exemple des figures 10a et 11a, on opère par ailleurs un mouvement de deux modules 9, 10. Ces mouvements peuvent être sensiblement symétriques, c'est-à-dire que, suivant un pivot vertical, les modules 9, 10 sont déplacés d'un secteur angulaire équivalent ou symétrique autour d'un plan vertical contenant l'axe optique.

Le troisième module 11 pourrait lui-même être mobile, par exemple suivant une mobilité en pivot d'axe horizontal pour abaisser ou relever légèrement la projection du troisième sous-faisceau 15 de sorte à modifier l'amplitude et/ou la position de la zone de moindre illumination 5.

Il est par ailleurs à noter que cet aspect de l'invention permet de modifier la forme et l'éventuel chevauchement des sous-faisceaux constituant le faisceau de croisement 3. On peut par exemple augmenter ou diminuer la largeur du faisceau de croisement 3 ou augmenter ou diminuer le chevauchement de plusieurs sous-faisceaux de sorte à varier et notamment diminuer l'intensité lumineuse résultante à certains endroits, ce qui assure la réalisation d'une zone de moindre illumination 5.

Dans un autre aspect de l'invention non illustré, plus de trois modules sont présents dans le dispositif de projection 8 du faisceau de croisement 3. Par exemple, pour augmenter la puissance lumineuse résultante des sous-faisceaux, plusieurs modules sont situés d'un côté de l'axe optique et plusieurs modules sont situés de l'autre côté de l'axe optique. Ainsi, contrairement à ce qui est représenté aux figures 10a et 11a, le module 9 serait remplacé par un groupe de modules comprenant au moins deux modules. Une situation similaire se présenterait pour le module 10. Avantageusement, les groupes de modules situés de part et d'autre de l'axe optique présentent une mobilité suivant un même axe de pivot, le secteur angulaire de cette mobilité pouvant être identique ou différent.

Comme précédemment, la mobilité des modules s'entend de la mobilité d'au moins une partie de chaque module de sorte à modifier la direction du sous-faisceau correspondant.

On pourra prévoir, sans sortir du contexte de l'invention que le dispositif de projection soit équipé d'un premier module ou groupe de modules 9 identique au deuxième module ou groupe de modules 10, ou bien que chacun de ces deux modules ou groupe de modules soit clairement identifié et agencé pour former un module ou groupe de modules gauche et un module ou groupe de modules droit. En fonction de la source lumineuse utilisée (source laser, diode électroluminescente...) et de la puissance d'émission de ces sources, et du flux lumineux total requis par un dispositif de projection donné, on pourra équiper les modules avec une plusieurs lentilles.

A l'usage, on a indiqué des applications possibles de la zone de moindre illumination 5 et de la projection d'un faisceau additionnel 12. On notera que des paramètres extérieurs peuvent permettre de piloter les différentes configurations du dispositif et du système de l'invention. Par exemple lors de la détection de précipitations ou de l'allumage d'essuie-glace, le système de l'invention peut être positionné de sorte à modifier la configuration du faisceau de croisement 3. Cette modification va dans le sens de la création ou de l'augmentation de la surface de zone de moindre illumination 5. En ce qui concerne le faisceau additionnel 12, des exemples liés à la navigation ou à l'affichage d'informations de sécurité ont été précédemment données à titre indicatif.

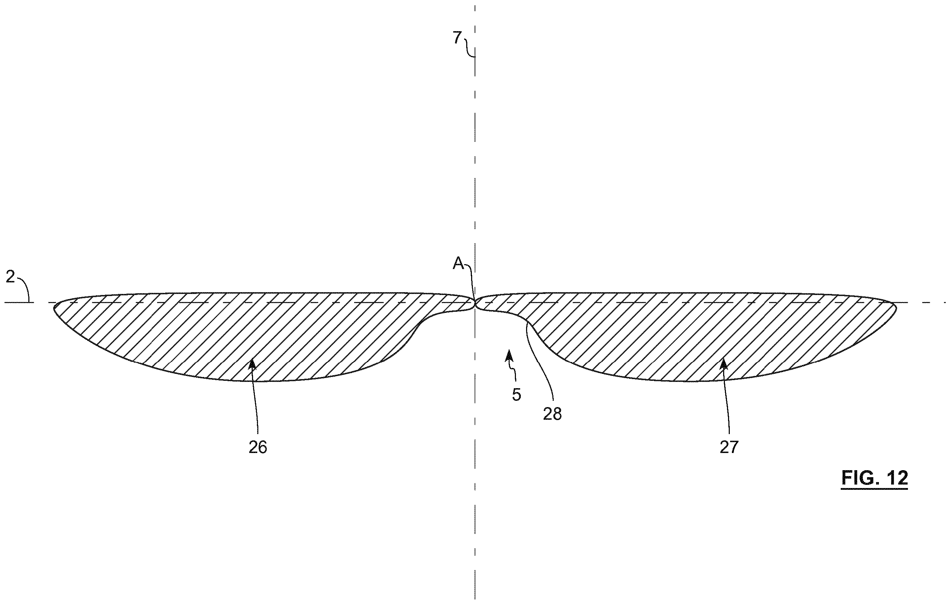

Les figures 12 à 14 présentent par ailleurs un autre mode de réalisation de l'invention. À noter que tout ou partie des caractéristiques présentées dans le mode de réalisation de ces figures peuvent être combinées avec tout ou partie des caractéristiques présentées dans le cas des modes de réalisation exposés précédemment. Alors que dans les modes de réalisation précédents il était préféré d'utiliser un groupe de modules droit et un groupe de modules gauche présentant sensiblement les mêmes caractéristiques, c'est-à-dire des faisceaux finaux sensiblement identiques en forme et en dimension, le mode de réalisation des figures 12 à 14 permet, dans un cas préférentiel, de différencier la forme d'un faisceau droit et la forme d'un faisceau gauche. Plus particulièrement, il est avantageux que la forme de ces deux faisceaux assure au moins en partie la génération de la zone de moindre illumination 5.

On a représenté à la figure 12 une possibilité de profil de faisceau vu en coupe transversale selon un plan vertical perpendiculaire à l'axe optique A de sorte à former le faisceau de croisement 3. À cette figure, l'axe optique A coupe le plan d'illustration en une intersection avec un axe vertical 7 et une ligne horizontale 2. Un premier faisceau 26, situé vers la gauche, est illustré et se positionne globalement dans un quadrant délimité par la ligne horizontale 2 en partie supérieure et l'axe vertical 7 en bordure droite. Un deuxième faisceau 27, situé vers la droite, est également illustré et se positionne globalement dans un quadrant délimité par la ligne horizontale 2 en partie supérieure et l'axe vertical 7 en bordure gauche.

Le faisceau gauche 26 et le faisceau droit 27 sont de préférence mais non limitativement symétriques l'un l'autre relativement à un plan vertical contenant l'axe optique A et la ligne verticale 7. Ce plan correspond avantageusement un plan milieu du véhicule. Mais les faisceaux 26, 27 sont chacun de préférence non symétrique en eux-mêmes pour préserver une portion de moindre illumination vers le centre du faisceau de croisement final.

Par ailleurs, au moins un, mais de préférence, les deux faisceaux 26, 27 préservent une portion de moindre illumination dans une aire située au voisinage de l'axe optique A, cette portion de moindre illumination participant à la zone de moindre illumination 5. Dans le mode de réalisation illustré en figure 12, les faisceaux 26, 27 produisent chacun une illumination bordée en partie haute par la ligne horizontale 2, correspondant à la ligne d'horizon. Cette illumination part d'un bord latéral, vers l'extérieur du véhicule, jusqu'à un bord central qui est de préférence située au niveau de l'axe optique A. Une portion majoritaire de l'illumination produite peut présenter un profil convexe dirigé vers le bas de sorte à produire une forme bombée telle que dans l'illustration de la figure 12. De préférence, cette convexité ne se poursuit pas jusqu'au bord latéral 28 au voisinage de l'axe optique A, de sorte à ménager un trou dans l'illumination produite. Ainsi, de préférence, une portion du bord latéral 28 comporte à ce niveau un rétrécissement, par exemple formé par une ligne curviligne concave, ou encore une portion inclinée, de sorte à dégager une portion de moindre illumination lorsque le faisceau 26 ou 27 se rapproche de la zone située au niveau de la verticale 7.

De préférence, chacun de ces deux faisceaux produit une portion essentiellement horizontale de faisceau au voisinage de l'axe optique A, par exemple sous la forme d'une poignée comme dans le cas des illustrations de la figure 12. La configuration illustrée n'est pas limitative et toute forme de faisceau 26, 27 permettant de dégager un espace non illuminé ou moins illuminé au niveau du bord latéral 28 de ces faisceaux à proximité de la ligne verticale 7 peut convenir.

Il est possible que les faisceaux 26, 27 se chevauchent au niveau du plan vertical passant par l'axe optique A. Ainsi, dans le cadre de l'invention, le faisceau 26 est appelé faisceau gauche en ce sens qu'il est majoritairement situé d'un côté gauche d'un plan passant verticale par l'axe optique A. Cela n'exclut pas que le faisceau gauche illumine en partie un côté droit dudit plan. C'est l'inverse pour le faisceau 27, appelé faisceau droit.

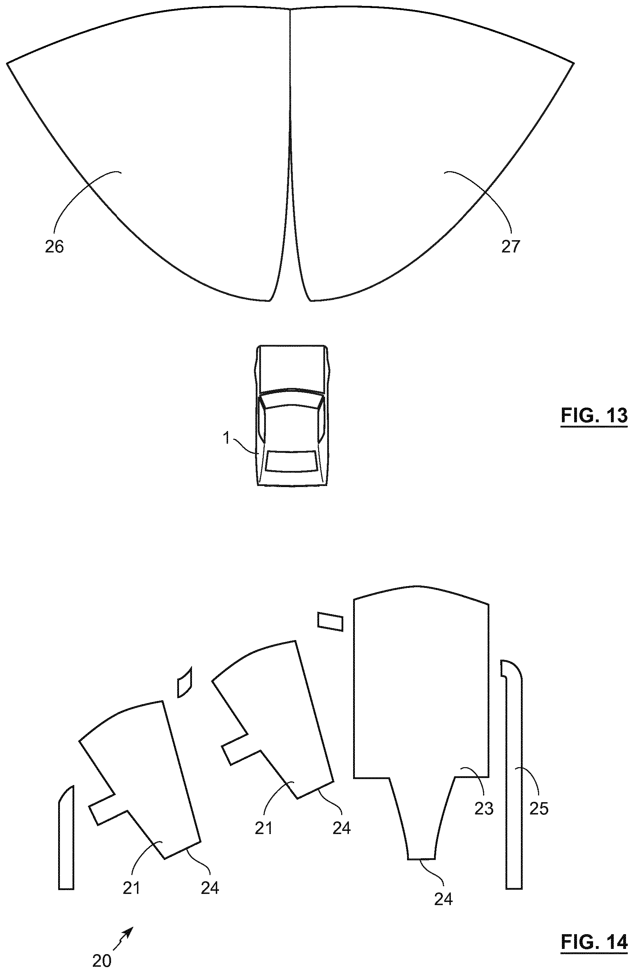

Une autre représentation d'un résultat produit par la projection des deux faisceaux 26, 27 est donnée en figure 13 en vue de dessus. Dans cette configuration, les faisceaux 26, 27 convergent légèrement vers l'infini de sorte à produire une illumination centrale ; mais, il préserve une zone de moindre illumination 5 autour de l'axe optique A à proximité du véhicule 1.

La figure 14 donnent un exemple de groupe 20 de modules utilisable pour former le faisceau gauche 26 décrit précédemment. On comprend qu'un groupe 20 de modules peut être formé de manière correspondante, et avantageusement symétrique, pour le faisceau droit 27. Le groupe 20 comporte un carénage 25 permettant de supporter et d'envelopper au moins un module permettant de générer le faisceau 26. Dans l'exemple illustré, trois modules 21, 22, 23 sont présents. Par exemple, le module 23 peut permettre de générer la portion du faisceau 26 comportant le rétrécissement en direction du plan vertical contenant l'axe optique. Ce rétrécissement peut par exemple être obtenu grâce à une lentille adaptée et/ou un cache et/ou un réflecteur de forme permettant de ne pas projeter de faisceaux lumineux, ou de limiter une telle projection, dans la zone correspondant au rétrécissement. On pourra utiliser toute technique de formation d'une coupure dans ce cadre.

Toujours à titre d'exemple, les autres modules 21, 22 peuvent être employés pour réaliser l'éclairage dans le reste du faisceau 26.

A la figure 14, les modules 21, 22, 23 sont chacun équipés d'une source lumineuse 24 par exemple sous forme de LEDs.

L'exemple donné à la figure 14 n'est pas limitatif et un groupe d'un seul module pourrait suffire de chaque côté du véhicule 1. Par ailleurs, ce mode de réalisation est compatible avec une mobilité de tout ou partie des modules, de sorte à faire évoluer la configuration des faisceaux 26, 27 suivant le mode d'utilisation souhaité. Par exemple, les faisceaux 26, 27 peuvent être rapprochés en direction de l'axe optique A de sorte à amoindrir ou supprimer la zone de moindre illumination 5.

L'invention n'est pas limitée aux modes de réalisation décrits, elle est définie dans les revendications.

## Revendications

1. Système d'éclairage pour véhicule automobile (1), comportant un dispositif de projection (8) d'un faisceau de croisement (3) dans une zone de projection, le dispositif de projection (8) étant configuré pour que le faisceau de croisement (3) comprenne une zone de moindre illumination (5) située à l'intérieur de la zone de projection, le dispositif de projection comportant au moins une pluralité de modules (9, 10, 11, 21, 22, 23) apte chacun à produire un sous-faisceau (13, 14, 15) participant au faisceau de croisement (3),
**caractérisé en ce que** le dispositif de projection (8) du faisceau de croisement (3) est configuré de sorte à ce que la position relative d'au moins deux sous-faisceaux soit modifiable entre au moins une position dans laquelle la zone de moindre illumination (5) est présente et au moins une autre position dans laquelle la zone de moindre illumination (5) est absente,
**en ce que** le système comprend un dispositif de projection (16) d'un faisceau additionnel (12) formé de rayons pixélisés et configuré pour illuminer une zone couvrant au moins en partie la zone de moindre illumination (5),
l'éclairement lumineux moyen dans la zone de moindre illumination (5) étant inférieur d'au moins 70%, préférentiellement au moins 80%, plus préférentiellement au moins 90%, de préférence au moins 97% à l'éclairement lumineux moyen dans le reste de la zone de projection du faisceau de croisement (3).

2. Système d'éclairage selon la revendication 1, dans lequel la zone de moindre illumination (5) comprend une limite supérieure (5b) décalée angulairement par rapport à une limite supérieure (3b) du faisceau de croisement (3) d'une valeur d'angle d'au moins 5° par rapport au point d'émission du faisceau de croisement.

3. Système selon l'une des revendications précédentes, dans lequel le faisceau additionnel (12) est configuré pour produire le contour d'au moins un pictogramme (21).

4. Système selon l'une des revendications précédentes, dans lequel la zone de moindre illumination (5) est entièrement couverte par le faisceau additionnel (12).

5. Système selon l'une des revendications précédentes, dans lequel le dispositif de projection (16) d'un faisceau additionnel (12) comprend un système à matrice de micro miroirs (19).

6. Système selon l'une des revendications précédentes, dans lequel la zone de moindre illumination (5) est symétrique par rapport à un plan vertical passant par l'axe optique (A) du dispositif de projection (8) du faisceau de croisement (3).

7. Système selon l'une des revendications précédentes, dans lequel la zone de moindre illumination (5) couvre un secteur angulaire de moins de 10° en section horizontale.

8. Système selon l'une des revendications précédentes, dans lequel la pluralité de modules (9, 10, 11, 21, 22, 23) comprend au moins un premier groupe d'au moins un module situé d'un premier côté de l'axe optique (A) du dispositif de projection (8) de faisceau de croisement (3), et un deuxième groupe d'au moins un module situé d'un autre côté dudit l'axe optique (A).

9. Système selon la revendication précédente, dans lequel le premier groupe est configuré pour éclairer uniquement du premier côté de l'axe optique (A) et le deuxième groupe est configuré pour éclairer uniquement du deuxième côté de l'axe optique (A).

10. Système selon la revendication précédente, dans lequel chacun parmi le premier groupe et le deuxième groupe est configuré pour produire un faisceau (26, 27) présentant une portion de moindre illumination sur un bord latéral (28) de faisceau situé du côté de l'axe optique (A), les portions de moindre illumination participant à former la zone de moindre illumination (5).

11. Système selon la revendication précédente, dans lequel chacun parmi le premier groupe et le deuxième groupe est configuré pour produire un faisceau (26, 27) présentant un profil, suivant un plan vertical perpendiculaire à l'axe optique (A), avec un rétrécissement en hauteur en direction de l'axe optique (A).

12. Système selon l'une des revendications 9 à 11, dans lequel le premier groupe et le deuxième groupe sont configurés pour produire des faisceaux (26, 27) symétriques l'un de l'autre relativement à un plan vertical passant par l'axe optique (A).

13. Système selon l'une des revendications précédentes, dans lequel la pluralité de modules (9, 10, 11) comprend au moins un module configuré pour produire un sous-faisceau mobile en rotation.

14. Système selon la revendication précédente et la revendication 8 en combinaison, dans lequel la position relative des sous-faisceaux produits respectivement par les modules du premier groupe et par ceux du deuxième groupe est modifiable.

15. Système selon la revendication précédente, comprenant un troisième groupe d'au moins un module situé suivant l'axe optique (A).

16. Véhicule automobile (1) équipé d'au moins un système selon l'une des revendications précédentes.

## Patentansprüche

1. Beleuchtungssystem für ein Kraftfahrzeug (1), umfassend eine Vorrichtung zur Projektion (8) eines Abblendlichtbündels (3) in einen Projektionsbereich, wobei die Projektionsvorrichtung (8) so konfiguriert ist, dass das Abblendlichtbündel (3) einen Bereich mit verminderter Ausleuchtung (5) beinhaltet, der sich im Inneren des Projektionsbereichs befindet, wobei die Projektionsvorrichtung mindestens eine Vielzahl von Modulen (9, 10, 11, 21, 22, 23) umfasst, die jeweils dazu in der Lage sind, ein Teilbündel (13, 14, 15) zu produzieren, das an dem Abblendlichtbündel (3) beteiligt ist, **dadurch gekennzeichnet, dass** die Projektionsvorrichtung (8) für das Abblendlichtbündel (3) so konfiguriert ist, dass die relative Position von mindestens zwei Teilbündeln zwischen mindestens einer Position, in der der Bereich mit verminderter Ausleuchtung (5) vorhanden ist, und mindestens einer anderen Position, in der der Bereich mit verminderter Ausleuchtung (5) nicht vorhanden ist, modifizierbar ist, dass das System eine Projektionsvorrichtung (16) für ein zusätzliches Bündel (12) beinhaltet, das aus pixeligen Strahlen gebildet ist und dazu konfiguriert ist, einen Bereich auszuleuchten, der den Bereich mit verminderter Ausleuchtung (5) mindestens teilweise abdeckt, wobei die mittlere Beleuchtungsstärke in dem Bereich mit verminderter Ausleuchtung (5) mindestens 70 %, bevorzugt mindestens 80 %, noch bevorzugter mindestens 90 %, vorzugsweise mindestens 97 % niedriger als die mittlere Beleuchtungsstärke in dem Rest des Projektionsbereichs des Abblendlichtbündels (3) ist.

2. Beleuchtungssystem nach Anspruch 1, wobei der Bereich mit verminderter Ausleuchtung (5) eine obere Grenze (5b) beinhaltet, die in Bezug auf eine obere Grenze (3b) des Abblendlichtbündels (3) um einen Winkelwert von mindestens 5° in Bezug auf den Emissionspunkt des Abblendlichtbündels winkelversetzt ist.

3. System nach einem der vorhergehenden Ansprüche, wobei das zusätzliche Bündel (12) dazu konfiguriert ist, die Kontur mindestens eines Piktogramms (21) zu produzieren.

4. System nach einem der vorhergehenden Ansprüche, wobei der Bereich mit verminderter Ausleuchtung (5) durch das zusätzliche Bündel (12) vollständig abgedeckt wird.

5. System nach einem der vorhergehenden Ansprüche, wobei die Projektionsvorrichtung (16) für ein zusätzliches Bündel (12) ein Matrixsystem mit Mikrospiegeln (19) beinhaltet.

6. System nach einem der vorhergehenden Ansprüche, wobei der Bereich mit verminderter Ausleuchtung (5) in Bezug auf eine vertikale Ebene, die durch die optische Achse (A) der Projektionsvorrichtung (8) für das Abblendlichtbündel (3) verläuft, symmetrisch ist.

7. System nach einem der vorhergehenden Ansprüche, wobei der Bereich mit verminderter Ausleuchtung (5) im horizontalen Schnitt einen Winkelsektor von weniger als 10° abdeckt.

8. System nach einem der vorhergehenden Ansprüche, wobei die Vielzahl von Modulen (9, 10, 11, 21, 22, 23) mindestens eine erste Gruppe von mindestens einem Modul, die sich auf einer ersten Seite der optischen Achse (A) der Projektionsvorrichtung (8) für das Abblendlichtbündel (3) befindet, und eine zweite Gruppe von mindestens einem Modul, die sich auf einer anderen Seite der optischen Achse (A) befindet, beinhaltet.

9. System nach dem vorhergehenden Anspruch, wobei die erste Gruppe dazu konfiguriert ist, eine Beleuchtung nur auf der ersten Seite der optischen Achse (A) vorzunehmen, und die zweite Gruppe dazu konfiguriert ist, eine Beleuchtung nur auf der zweiten Seite der optischen Achse (A) vorzunehmen.

10. System nach dem vorhergehenden Anspruch, wobei jede von der ersten Gruppe und der zweiten Gruppe dazu konfiguriert ist, ein Bündel (26, 27) zu produzieren, das einen Abschnitt mit verminderter Ausleuchtung an einem seitlichen Bündelrand (28), der sich auf der Seite der optischen Achse (A) befindet, aufweist, wobei die Abschnitte mit verminderter Ausleuchtung an der Bildung des Bereichs mit verminderter Ausleuchtung (5) beteiligt sind.

11. System nach dem vorhergehenden Anspruch, wobei jede von der ersten Gruppe und der zweiten Gruppe dazu konfiguriert ist, ein Bündel (26, 27) zu produzieren, das gemäß einer zu der optischen Achse (A) senkrechten vertikalen Ebene ein Profil mit einer Höheneinschnürung in Richtung der optischen Achse (A) aufweist.

12. System nach einem der Ansprüche 9 bis 11, wobei die erste Gruppe und die zweite Gruppe dazu konfiguriert sind, Bündel (26, 27) zu produzieren, die relativ zu einer vertikalen Ebene, die durch die optische Achse (A) verläuft, zueinander symmetrisch sind.

13. System nach einem der vorhergehenden Ansprüche, wobei die Vielzahl von Modulen (9, 10, 11) mindestens ein Modul beinhaltet, das dazu konfiguriert ist, ein drehbewegliches Teilbündel zu produzieren.

14. System nach dem vorhergehenden Anspruch und Anspruch 8 in Kombination, wobei die relative Position der jeweils durch die Module der ersten Gruppe und diejenigen der zweiten Gruppe produzierten Teilbündel modifizierbar ist.

15. System nach dem vorhergehenden Anspruch, beinhaltend eine dritte Gruppe von mindestens einem Modul, die entlang der optischen Achse (A) angeordnet ist.

16. Kraftfahrzeug (1), das mit mindestens einem System nach einem der vorhergehenden Ansprüche ausgerüstet ist.

## Claims

1. A motor-vehicle lighting system (1) including a device (8) for projecting a low beam (3) into a projection zone, the projecting device (8) being configured so that the low beam (3) comprises a zone of lesser illumination (5) located in the interior of the projection zone,
the projecting device comprising at least a plurality of modules (9, 10, 11, 21, 22, 23) that are each able to produce a sub-beam (13, 14, 15) that participates in the low beam (3),
**characterized in that** the device (8) for projecting the low beam (3) is configured so that the relative position of at least two sub-beams is modifiable between at least one position in which the zone of lesser illumination (5) is present and at least one other position in which the zone of lesser illumination (5) is absent,
**in that** the system comprises a device (16) for projecting an additional beam (12) formed from pixelized rays and configured to illuminate a zone that at least partially covers the zone of lesser illumination (5), the average luminance being lower at least 70%, preferably at least 80%, more preferably at least 90% and preferably at least 97% than the average luminance in the rest of the projection zone of the low beam (3).

2. The lighting system as claimed in claim 1, wherein the zone of lesser illumination (5) comprises an upper limit (5b) that is angularly offset with respect to an upper limit (3b) of the low beam (3) by an angular value of at least 5° with respect to the point of emission of the low beam.

3. The system according to one of the preceding claims, wherein the additional beam (12) is configured to produce the outline of at least one pictogram (21).

4. The system according to one of the preceding claims, wherein the zone (5) of lesser illumination is entirely covered by the additional beam (12).

5. The system according to one of the preceding claims, wherein the device (16) for projecting an additional beam (12) comprises a micromirror-array system (19).

6. The system according to one of the preceding claims, wherein the zone of lesser illumination (5) is symmetric with respect to a vertical plane passing through the optical axis (A) of the device (8) for projecting the low beam (3).

7. The system according to one of the preceding claims, wherein the zone of lesser illumination (5) covers an angular sector of less than 10° in horizontal cross section.

8. The system according to one of the preceding claims, wherein the plurality of modules (9, 10, 11, 21, 22, 23) comprises at least one first group of at least one module located on a first side of the optical axis (A) of the device (8) for projecting the low beam (3), and a second group of at least one module located on another side of said optical axis (A).

9. The system according to the preceding claim, wherein the first group is configured to illuminate only the first side of the optical axis (A) and the second group is configured to illuminate only the second side of the optical axis (A).

10. The system according to the preceding claim, wherein each among the first group and second group is configured to produce a beam (26, 27) comprising a segment of lesser illumination on a lateral beam edge (28) located on the side of the optical axis (A), the segments of lesser illumination participating to form the zone of lesser illumination (5).

11. The system according to the preceding claim, wherein each among the first group and second group is configured to produce a beam (26, 27) having a profile, in a vertical plane perpendicular to the optical axis (A), with a heightwise constriction in the direction of the optical axis (A).

12. The system according to one of claims 9 to 11, wherein the first group and second group are configured to produce beams (26, 27) that are symmetric to one another relative to a vertical plane passing through the optical axis (A).

13. The system according to the preceding claim, wherein the plurality of modules (9, 10, 11) comprises at least one module that is configured to produce a rotatable sub-beam.

14. The system according to the preceding claim in combination with claim 8, wherein the relative position of the sub-beams respectively produced by the modules of the first group and by those of the second group is modifiable.

15. The system according to the preceding claim, comprising a third group of at least one module located along the optical axis (A).

16. A motor-vehicle (1) equipped with a least one system as claimed in one of the preceding claims.
